# EUROPÄISCHE PATENTSCHRIFT

(11) **EP 0 951 788 B1**
(45) Veröffentlichungstag und Bekanntmachung des Hinweises auf die Patenterteilung: **18.04.2007**
(21) Anmeldenummer: 96946090.6
(22) Anmeldetag: 17.12.1996
(51) Int. Cl.: H04Q 7/22, H04Q 7/38

(54) **ANORDNUNG ZUR FUNKÜBERTRAGUNG VON DIGITALEN DATEN IN EINEM FUNKNETZ**
ARRANGEMENT FOR RADIO TRANSMISSION OF DIGITAL DATA IN A RADIO NETWORK
SYSTEME DE TRANSMISSION RADIO NUMERIQUE DANS UN RESEAU RADIO

(30) Priorität: 29.12.1995 DE 19549148
(43) Veröffentlichungstag der Anmeldung: 27.10.1999
(73) Patentinhaber: SIEMENS AKTIENGESELLSCHAFT, 80333 München (DE)
(72) Erfinder: RITTER, Gerhard, D-86943 Thaining (DE); KAMMERLANDER, Karl, D-82515 Wolfratshausen (DE)
(86) Internationale Anmeldenummer: PCT/DE1996/002436
(87) Internationale Veröffentlichungsnummer: WO 1997/024892

(56) Entgegenhaltungen:
- US-A- 5 327 576
- 1995 IEEE 45TH VEHICULAR TECHNOLOGY CONFERENCE. COUNTDOWN TO THE WIRELESS TWENTY-FIRST CENTURY (CAT. NO. 95CH35821 AND 95CB35821), Bd. 1, 25. - 28.Juli 1995, NEW YORK, NY, USA, IEEE, USA,, Seiten 469-473, XP000550217 P.JUNG AND B. STEINER: "A joint detection CDMA mobile radio system concept developed within COST 231"
- IEEE JOURNAL ON SELECTED AREAS IN COMMUNICATIONS, Bd. 12, Nr. 4, Mai 1994, USA, Seiten 568-579, XP000588834 BLANZ J. ET AL.: "Performance of a cellular hybrid C/TDMA mobile radio system applying joint detection and coherent receiver antenna diversity"
- SIXTH IEEE INTERNATIONAL SYMPOSIUM ON PERSONAL, INDOOR AND MOBILE RADIO COMMUNICATIONS; PIMRC'95; WIRELESS: MERGING ONTO THE INFORMATION SUPER HIGHWAY, Bd. 2, 27. - 29.September 1995, NEW YORK, NY, USA, Seiten 512-616, XP000677647 KLEIN, STEINER AND STEIL: "Known and novel diversity approaches in a JD-CDMA system concept developed within COST 231"

## Beschreibung

Die Erfindung bezieht sich auf eine Anordnung zur Funkübertragung von digitalen Signalen.

Teilnehmerstationen für Funkdienste, insbesondere für mobile Funkdienste unterscheiden sich von Teilnehmerstätionen für drahtgebundene Kommunikationsdienste unter anderem dadurch, daß erstere zum größten Teil weder ortsfest noch ständig betriebsbereit sind. Während ihrer Betriebszeit aktivieren mobile Teilnehmer jedoch ihre Mobilstationen bereits soweit, daß ihr Aufenthaltsort während ihrer Ortsveränderungen (roaming) ständig erfaßt werden können. Sie sind im Falle einer Verbindung an ihrem jeweiligen Aufenthaltsort im betriebsbereiten Zustand erreichbar. Weiterhin müssen während der Verbindung auch Verbindungsumschaltungen (handover) erfolgen, wenn aufgrund von Ortsveränderungen in einem zellularen Funksystem eine Funkzellengrenze überschritten wird und eine Zuordnung zu einer anderen Basisstation erfolgt.

Diese Erfordernisse führen zu Systemfunktionen, die in organisatorischen Prozeduren der Funkschnittstelle zwischen den Basisstationen und den Mobilstationen berücksichtigt werden müssen. Diese Abläufe greifen in die funktechnischen und datentechnischen Systemfunktionen ein. Als Beispiel für die Komplexität einer solchen Funkschnittstelle und eines solchen Systems wird auf die Spezifikationen des unter der Bezeichnung GSM (Global System for Mobile Communication) bekannten Mobilfunksystems verwiesen, die von ETSI (European Telecommunication Standards Institute) erstellt wurden.

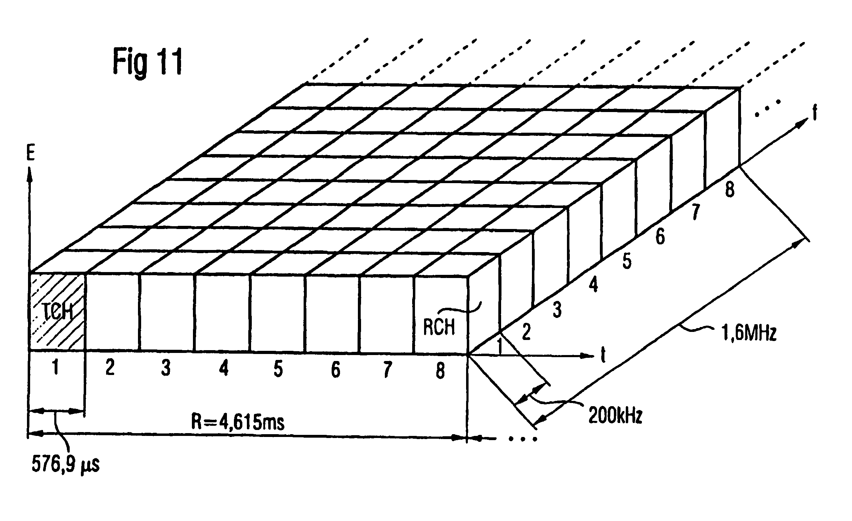

Das GSM ist als Frequenzvielfach/Zeitvielfach-Zugriffsverfahren (FD/TDMA-Verfahren) ausgebildet und schematisch in Fig. 11 dargestellt, wobei in vertikaler Richtung die Energie E und in horizontaler Richtung die Zeit t und die Frequenz f dargestellt sind. Die als physikalische Kanäle bezeichneten Funkkanäle RCH (Radio Channels) sind in einem Frequenzraster von 200 kHz angeordnet. In jedem RCH werden in einem periodischen Zeitmultiplex-Rahmen acht logische Kanäle, die auch als Verkehrskanäle TCH (Traffic Channels) bezeichnet werden, als periodische Folge von acht zeitkomprimierten Datenblöcken in acht Zeitschlitzen mit einer Dauer von jeweils 576,9 s übertragen, die den periodischen GSM-Rahmen mit einer Rahmendauer R von 4,615 ms bilden. Ein Verkehrskanal TCH ist auf dem Funkweg somit als eine in den jeweils gleichen Zeitschlitz der periodischen Rahmenfolge eingefügte zeitkomprimierte und kontinuierliche Blockfolge definiert. In acht unterschiedlichen Funkkanälen RCH mit einer Gesamtbandbreite von 8 x 200 kHz = 1,6 MHz, die entweder zusammenhängend oder verteilt angeordnet sind, können beispielsweise insgesamt 64 Verbindungen parallel abgewickelt werden. Hierzu sind acht Sende/Empfangseinrichtungen erforderlich.

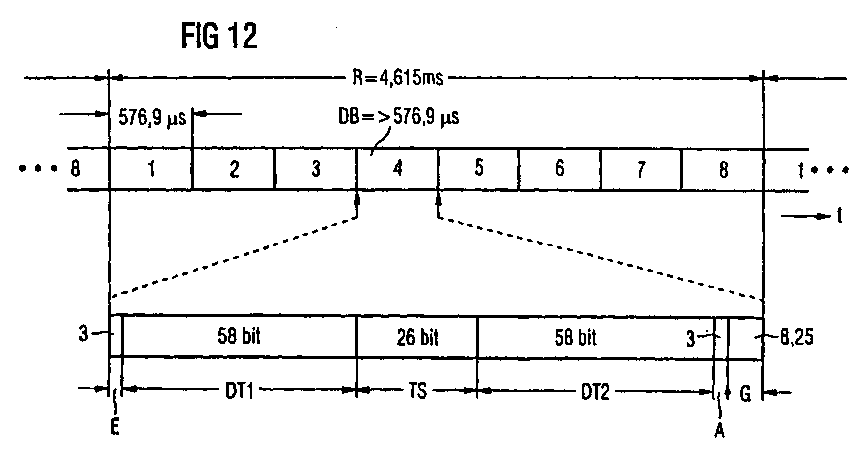

Die Struktur und die Dauer der in den Zeitschlitzen komprimiert übertragenen Datenblöcke DB ist in Fig. 12 dargestellt. Jeder Datenblock DB beinhaltet einen Datenteil DT, der in zwei Teilblöcke DT1 und DT2 von je 58 Bits untergliedert ist. Dazwischen ist eine Trainingssequenz TS vorgesehen, die für die Adaption des Empfängers an die jeweilige Situation der Mehrwegeausbreitung dient. Am Anfang und am Ende der Datenteile DT1 und DT2 sind für die bei blockweiser Übertragung auftretenden Ein- bzw. Ausschwingvorgänge des Senders und Empfängers ein Einschwingzeitraum ET und ein Ausschwingzeitraum AT vorgesehen. Ein am Ende des Datenblocks befindlicher Schutzzeitraum GT (Guardtime) von 8,25 Bits erlaubt es, in den Basisstationen gewisse Toleranzen des entfernungsabhängigen Laufzeitausgleichs (Timing Advance) der Mobilstationen aufzufangen.

Das GSM stellt pro Verkehrskanal TCH eine übertragbare Nutzbitrate von 13 Bit/s zur Verfügung. Nachdem eine fehlersichernde Datencodierung, die Trainingssequenz TS und die Zeitintervalle ET, AT und GT eingefügt sind, beträgt die äquivalente Bitrate eines Verkehrskanals TCH 33,85 kbit/s. Da in jedem Funkkanal RCH acht Verkehrs kanäle TCH in acht zeitkomprimierten Blöcken innerhalb einer Rahmendauer von 4,615 ms im Zeitmultiplex-Verfahren übertragen werden, erhöht sich die auf dem Funkweg übertragene Bitrate eines Funkkanals RCH um den Faktor acht auf 270,8 kbit/s. Diese entspricht einer maximalen Zeichenfolgefrequenz von 135,4 kHz, die mit dem Modulationsverfahren GMSK (Gaussian Minimum Shift Keying) in einer 3 dB-Bandbreite von ca. 160 kHz übertragen wird. Dieses Modulationsverfahren ermöglicht es, daß im GSM pro Funkkanal RCH acht Verkehrskanäle TCH mit einer äquivalenten Kanalbitrate von 33,85 kbit/s, also mit 270,8 kbit/s mit einem Kanalabstand von nur 200 kHz übertragen werden können. Der effektive Frequenzbandbedarf für einen digitalen Verkehrskanal TCH beträgt somit nur 25 kHz. Mit dieser relativ schmalbandigen Auslegung ist das GSM pro Verkehrskanal TCH auf eine maximale Nutzbitrate von 13 kbit/s begrenzt. Digitale Signale können somit durch standardisierte Datenraten von 9,6 kbit/s, 4,8 kbit/s, 2,4 kbit/s oder 1,2 kbit/s mit entsprechend höheren Redundanzfaktoren übertragen werden.

Für die Zuteilung höherer Übertragungskapazitäten in einem Schmalbandsystem geht man bei TDMA-Systemen davon aus, einem Teilnehmer, der einen höheren Kapazitätsbedarf hat, eine Reihe von unmittelbar aufeinanderfolgenden Zeitschlitzen in einem Rahmen zuzuteilen. Damit könnte auf relativ einfache Weise die Übertragungskapazität den Erfordernissen, durch Zuteilung der entsprechenden Anzahl von Zeitschlitzen bzw. Blöcken pro Rahmen, angepaßt werden. Die Benutzung von unmittelbar benachbarten Zeitschlitzen für dieselbe Verbindung ist jedoch nicht immer möglich, weil zum sicheren und schnellstmöglichen Ablauf von Systemfunktionen Signalisierungsdialoge zwischen den Basisstationen und den Mobilstationen notwendig sind und diese Dialoge Verarbeitungszeiten erfordern. Das GSM ist aus der Sicht der Kanalzuteilung und der Verbindungsumschaltung auch derart konzipiert, daß einer Verbindung maximal nur ein Zeitschlitz pro Rahmen zugeteilt werden kann und damit ist es auf eine maximale Bitrate von 13 kbit/s pro Verbindung begrenzt.

Ein weiteres Verfahren zur Funkübertragung von digitalen Signalen ist das bekannte JD-(Joint Detection)-CDMA(Code Division Multiple Access)-Verfahren, das in der DE 4212300 und in einer Veröffentlichung von P. Jung und P. Steiner: "Konzept eines CDMA-Mobilfunksystems mit gemeinsamer Detektion (JD) für die dritte Mobilfunkgeneration" sowie in 1995 IEEE 45TH VEHICULAR TECHNOLOGY CONFERENCE COUNTDOWN TO THE WIRELESS TWENTY-FIRST CENTURY (CAT. NO. 95CH35821 AND 95CB35821)", Bd. 1, 25.-28. Juli 1995, New York, NY, USA, IEEE, USA, Seiten 469-473, P. Jung and B. Steiner: "A joint detection CDMA mobile radio system concept developed within COST 231" beschrieben ist. In letzterer ist auch ein erster Ansatz für ein FD/TD/CDMA-Verfahren angegeben.

Der Erfindung liegt die Aufgabe zugrunde, eine Anordnung zur Funkübertragung anzugeben, die es gestattet, hohe Bitraten an bestimmte Teilnehmer zu übertragen, und die in bestehende Funksysteme einfach eingefügt werden kann.

Erfindungsgemäß wird diese Aufgabe durch die Anordnung mit den Merkmalen des Patentanspruchs 1 gelöst. Weiterbildungen der Erfindung ergeben sich aus den Unteransprüchen.

Die erfindungsgemäße Anordnung dient zur Funkübertragung von digitalen Daten in einem Funknetz, wobei im Funknetz die Übertragung unter Verwendung eines TDMA-Teilnehmerseparierungsverfahrens erfolgt und schmal- und/oder breitbandige Frequenzbänder benutzt werden. Die breitbandigen Frequenzbänder nutzen zur Teilnehmerseparierung zusätzlich ein CDMA-Verfahren. Die Anordnung enthält einen Sender und einen Empfänger, die einen GSM-Modus in dem schmalbandigen Frequenzband und einen TDMA/CDMA-Modus in dem breitbandigen Frequenzband unterstützen. Zur Detektion der digitalen Daten im TDMA/CDMA-Modus wird vorteilhafterweise ein JD (joint detection) Detektionsverfahren genutzt. Durch die Erfindung kann insbesondere auf einfache und vorteilhafte Weise ein CDMA-Verfahren in das bekannte GSM-Verfahren eingeführt werden.

Durch die Erfindung wird mit alternativen und/oder in die vorhandene Funkinfrastruktur einführbaren Einrichtungen eine Erhöhung der Wirtschaftlichkeit des vorhandenen Gesamtsystems erreicht. Es werden schrittweise gestaffelte Übertragungen für Bitraten bis zu ca. 2 Mbit/s für verschiedene Breitbanddienste ermöglicht. Zusätzlich können Dualmode- oder Multimode-Geräte bereitgestellt werden, die es gestatten, nach wie vor alle spezifizierten Systemfunktionen von bestehenden Mobilfunksystemen zusätzlich durchzuführen.

Die hohen Bitraten können mobilen Teilnehmern, wie beispielsweise Rettungsdienste oder anderen mobilen Diensten, die Telemetriedaten übertragen, oder solchen Teilnehmern zur Verfügung gestellt werden, die ortsfeste Endeinrichtungen oder solchen mit beschränkter Mobilität besitzen, aber über ein Funknetz nach Art eines drahtlosen Fernsprechanschlußes, der sogenannten WLL (Wireless Local Loop) angeschlossen sind. Hierbei wird beispielsweise mit Teilnehmern in abgelegenen Bereichen nicht über Drahtverbindungen kommuniziert, sondern drahtlos.

Bei der Erfindung bleiben insbesondere die bereits vorhandenen Infrastrukturen und die im Netz implementierten Systemfunktionen voll erhalten und es werden nur solche Systemparameter innerhalb der Funkinfrastruktur erweitert oder ergänzt, die vom Ablauf der Systemfunktionen her bereits bestehen und den Betrieb der vorhandenen Teilnehmerstationen nicht einschränken.

Die Steigerung der Wirtschaftlichkeit und die Übertragung höherer Bitraten kann durch die Einbringung von Systemelementen eines mit GSM-Block-, Zeitschlitz- und Rahmenstrukturen arbeitenden JD-CDMA Verfahrens, das weiterhin JD-GSM genannt wird, in das GSM erfolgen.

Bei der erfindungsgemäßen Anordnung werden beispielsweise in acht Zeitschlitzen des JD-GSM und bei einer Bandbreite von 1,6 MHz, ebenso wie im GSM insgesamt 64 Verkehrskanäle mit einer Nutzbitrate von je 13 kbit/s abgewickelt. Alternativ können in Übereinstimmung mit den Kanalzuteilungs- und Verbindungsabwicklungs-Mechanismen des GSM alle acht in einem Zeitschlitz übertragbaren Verkehrskanäle mit einer Bitrate von 8 * 13kbit/s = 104 kbit/s an einen einzigen Teilnehmer vergeben werden. Während das GSM für 64 Verbindungen acht Sende/Empfangseinrichtungen benötigt, braucht das erfindungsgemäße JD-GSM für 64 Verbindungen mit 13 kbit/s-nur eine einzige Sende/Empfangseinrichtung. Somit wird der Platzbedarf für die Sende/Empfangseinrichtungen in den Basisstationen um etwa den Faktor acht reduziert.

Mit einer JD-GSM-Struktur kann die im GSM vorgesehene Rahmen- und Zeitschlitzstruktur voll erhalten bleiben wenn mindestens ein zusammenhängender Kanalblock von acht GSM-Kanälen mit einer Gesamtbandbreite von 1,6 MHz zur Verfügung steht. Der uneingeschränkte Mobilfunkbetrieb setzt hierbei lediglich voraus, daß im gesamten Mobilfunknetz eine hinreichende Anzahl von derartigen zusammenhängenden 1,6 MHz Frequenzbändern vorhanden ist, so daß auch Verbindungsumschaltungen gemäß der im GSM vorgesehenen Prozeduren erfolgen können.

Wenn einer Basisstation mehrere benachbarte GSM-Frequenzbänder von je 1,6 MHz zugeteilt werden, werden sehr hohe relativ breitbandige Datenströme über eine einzige breitbandige Datenverbindung übertragen. Diese Übertragung erfolgt ebenfalls periodisch pro Rahmen, im jeweils gleichen Zeitschlitz der frequenzmäßig nebeneinander liegenden 1,6 MHz-Frequenzbänder. In jedem dieser Frequenzbänder wird im zugeteilten Zeitschlitz ein JD-Verkehrskanal-Bündel mit 8 x 13 = 104 kbit/s übertragen. Diese unmittelbar nebeneinanderliegenden Unterkanäle werden mit einem einzigen breitbandigen Sender und Empfänger mit den erforderlichen Subkanaleinrichtungen aufbereitet, übertragen und detektiert.

In den Sendeeinrichtungen werden die breitbandigen Nutzdaten in Datenteilströme von je 13 kbit/s zerlegt, redundanzcodiert, in Blockform gebracht, anschließend gespreizt, in die zugeteilten Zeitschlitze eingefügt und in einer Basisband-Frequenzlage auf die erforderlichen JD-Unterträger aufmoduliert. Die breitbandigen Basisband-Summensignale werden dann in einem RF-Mischer in die gewünschte Radiofrequenzlage gebracht und im vorgesehenen Zeitschlitz breitbandig über einen einzigen RF-Leistungsverstärker ausgesendet.

In den Empfangseinrichtungen wird das Breitbandsignal in die Frequenzlage der Zwischenfrequenz abgemischt und der Zwischenfrequenzverstärker auf die für die Breitbandübertragung erforderliche Bandbreite eingestellt. Am Ausgang des Zwischenfrequenzteils ist eine modulare JD-Detektionseinheit angeordnet, mittels der die parallelen JD-Unterträgersignale detektiert und über eine entsprechende Datenprozessor-Anordnung wieder in den ursprünglichen hochbitratigen Datenstrom zurückgewandelt werden.

Die Höhe der mit einer erfindungsgemäßen Struktur übertragbaren Bitraten hängt von der Zahl der zusammenhängend zuteilbaren Frequenzkanäle ab. Wenn zehn Kanäle mit 1,6 MHz verfügbar sind, kann eine Nutzbitrate von 1040 kbit/s = 1024 + 16 kbit/s in einem der acht GSM-Zeitschlitze als Breitband-Zeitschlitz mit einer Gesamtbandbreite von 16 MHz übertragen werden. In einem Kanalbündel von 20 derartigen Kanälen, d.h. in einer Gesamtbandbreite von 32 MHz wird in einem Zeitschlitz eine Nutzbitrate von ca. 2 Mbit/s = 2080 kbit/s = 2048 + 32 kbit/s realisiert.

Eine volle netzweite Mobilfunkfähigkeit wird mit dieser Breitbandlösung erreicht, wenn im Netz die Frequenzvergabe in den Basisstationen nach den Gesichtspunkten der maximal geforderten Breitbandübertragung ausgelegt ist und eine hinreichende Zahl an Breitbandkanälen für den Aufbau von Verbindungen, sowie zum Zweck der Verbindungsumschaltung verfügbar ist.

In den Sende/Empfangseinrichtungen wird erfindungsgemäß beispielsweise durch spezielle für das JD-GSM definierte, codierten Kanalbefehle die mittlere RF-Trägerfrequenz des Breitbandkanals, die Gesamtbandbreite und die Zahl der jeweils erforderlichen Frequenzbänder von je 1,6 MHz Breite eingestellt. Damit ist bei entsprechender Planung der Breitbandkanäle nicht nur deren Zuteilung beim Verbindungsaufbau, sondern auch die Durchführung der Verbindungsumschaltung (Handover) in eine andere Funkzelle, jeweils mit einem einzigen vordefinierten Kanalvorschlag, wie beim GSM, möglich. Darüber hinaus bleiben alle im GSM bereits implementierten Funktionsabläufe voll erhalten.

Erfindungsgemäß können weiterhin die Teilnehmerstationen entsprechend den gewünschten Servicebandbreiten als Dualmode- oder Multimode-Geräte mit umschaltbarer Software-Auslegung ausgeführt werden.

Für ein hybrides GSM-System, das beide Betriebsarten, den konventionellen FD/TDMA-GSM-Betrieb und den JD-GSM-Betrieb parallel gestattet, können die 200 kHz-Kanäle für den konventionellen Betrieb verteilt sein.

Grundsätzlich bieten CDMA-Verfahren den Vorteil erhöhter Gleichkanalstörfestigkeit. Deshalb wird die erhöhte Gleichkanalstörfestigkeit des JD-GSM im Endausbau auch für eine erhöhte Wirtschaftlichkeit des Systems genutzt.

Entsprechend der DE-P 19528207.8 ist es bei Einführung eines JD-CDMA-Übertragungsverfahrens möglich, das GSM-Clustermaß von ca. neun bis zwölf auf ca. drei bis vier zu reduzieren, was zu einer direkt proportionalen Reduzierung der Zahl der Basisstationen für die Funkversorgung der gleichen Teilnehmermenge in der gleichen Versorgungsfläche führt. Die vorhandenen Basisstationen können damit in steigendem Maß mit JD-GSM-Einrichtungen ausgebaut werden. Auf diese Weise können die bestehenden Netze beginnend mit einer geringen Anzahl von JD-GSM-Einrichtungen zu einem immer weiter breitbandübertragungsfähigen JD-GSM-Netz mit erhöhter Wirtschaftlichkeit, ausgebaut werden. Hierbei ist es aufgrund der Aufwärtskompatibilität des JD-GSM problemlos möglich, mit Dualmode-Basisstationen einen Restbetrieb mit konventionellen FD/TDMA-GSM-Mobilstationen, sowie mit verschiedenen Arten von Dual- oder Multimode-Endeinrichtungen einen Alternativbetrieb von FD/TDMA-GSM oder JD-GSM-Betrieb mit einer Kombination von Breitbandübertragung, durchzuführen. Für die Frequenzplanung ist es ohne weiteres möglich, unterschiedliche Clustermaße für die beiden Betriebsarten vorzusehen, um den wirtschaftlichen Vorteil den das JD-GSM bietet, in großem Umfang nutzen zu können.

Der ökonomische Vorteil der durch die Erfindung erzielt wird liegt in der Einsparung der Errichtung neuer Basisstationen. Dieser nutzbringende Effekt ist auf die Verringerung des Clustermaßes von neun bis zwölf auf drei bis vier bei omnidirektionalen Funkzellen zurückzuführen, der ausschließlich durch die hohe Gleichkanalstörfestigkeit des JD-GSM verursacht wird. Dieselben Relationen gelten aber sinngemäß auch für Sektorzellen mit Richtantennen. Damit ist bei überwiegendem JD-CDMA-Betrieb die erforderliche Zahl der Basisstationen in einer zu versorgenden Fläche generell um den Faktor drei geringer, oder es kann beim Ausbau bereits bestehender Netze und bei gleichbleibender Zahl von Basisstationen ein um den Faktor drei höheres Verkehrsaufkommen bewältigt werden.

Die höhere Verkehrskapazität des JD-GSM kann im Raumvolumen der bereits bestehenden Basisstationen leicht untergebracht werden, weil bei Umrüstungen und Ausbau die Zahl der erforderlichen Sende/Empfangseinrichtungen um etwa den Faktor acht absinkt. Wenn eine Basisstation voll für JD-CDMA ausgelegt ist, sinkt der Raumbedarf trotz dreifacher Kapazität auf unter 40 % ab.

In JD-GSM Sendeeinrichtungen können überdies viele Signalquellen in der Kleinleistungsebene zusammengefaßt und über einen einzigen linearen Sendeverstärker ohne Antennenkoppler auf eine einzige Antenne geführt werden. Hierdurch wird auch die Zahl der erforderlichen Antennen deutlich verringert. Der in den Basisstationen gewonnene Raum steht für den weiteren Kapazitätsausbau zur Verfügung. Sehr kleine Basisstationen, beispielsweise für Mikrozellen, lassen sich mit JD-GSM-Einrichtungen um Faktoren leichter realisieren als mit FD/TDMA-GSM Einrichtungen.

Grundsätzlich führt die Einbringung des JD-CDMA-Verfahrens in GSM-Netze somit zu einer deutlichen Steigerung der Wirtschaftlichkeit für die Netzbetreiber bei deutlicher Verringerung des Raumbedarfs. Darüber hinaus eröffnet es durch die Breitbandübertragung auch die technischen Möglichkeiten einer vollen ISDN-Kompatibilität sowie die Übertragung von Nutzbitraten bis zu 2 Mbit/s.

Die weiteren erfindungsgemäßen Ausführungsformen beziehen sich auf die Möglichkeiten zur Gestaltung von weiteren JD-CDMA/FD/TDMA-Funksysteme, die nicht den bereits vollzogenen Festlegungen des bestehenden GSM unterliegen und somit weitere Freiheitsgrade bieten, um die organisatorischen Prozeduren der Funkschnittstelle für die Breitbandübertragung, die sich für den Einsatz von JD-CDMA-Systemen bieten, zu gestalten.

Für die Gestaltung von Funksystemen zur Übertragung hoher Datenraten bestehen erfindungsgemäß mehrere Möglichkeiten, nämlich einerseits, die Zuteilung aller acht Zeitschlitze des Rahmens eines JD-Funkkanals mit je acht Verkehrskanälen pro Zeitschlitz an eine einzige Verbindung, wobei gleichzeitig mehrere solche frequenzmäßig unmittelbar nebeneinander liegende JD-Funkkanäle von z.B. je 1,6 MHz zugeteilt werden können. In einer solchen Anordnung stehen alle 64 logischen Kanäle jedes Funkkanals für eine Verbindung mit einer Nutzdatenrate von 832 kbit/s zur Verfügung, wobei bereits mit einer Anzahl von drei nebeneinander liegenden Funkkanäle, d.h. innerhalb einer Bandbreite von 4,8 MHz eine Datenrate von 3 x 832 = 2496 kbit/s übertragbar ist. Mit einer solchen Anordnung können 2 Mbit/s relativ einfach übertragen werden.

Andererseits sind die in den Zeitschlitzen übertragenen Blockformate bezüglich Zeitraster, Datenrate und Trainingssequenz so ausgelegt, daß die durch Mehrwegeausbreitung entstehenden Echoverzerrungen der Funksignale, die durch Umwegesignalverzögerungen verursacht werden, auch bei relativ langen Umwegen wie sie z.B. in Gebirgen auftreten, noch beherrscht werden können. Da aber in Großstädten typischerweise nur relativ geringe Signalverzögerungen auftreten, wird erfindungsgemäß für spezielle "City-Netze" sowie für ortsfeste "WLL-Einrichtungen" bereitgestellt die Zeitschlitz- und Rahmenlänge der JD-CDMA-Strukturen unter vollständiger Beibehaltung des Blockaufbaus durch entsprechende Erhöhung der Bitrate, der Taktfrequenzen und der Bandbreite des JD-Funkkanals in der Zeitachse, um einen bestimmten Faktor zu komprimieren. Hierdurch tritt im Gesamtsystem eine der Takterhöhung proportionale Erhöhung der Übertragungskapazität durch Erhöhung der übertragbaren Bitraten auf. Somit kann jeder Verkehrskanal für alle niederbitratigen Dienste, wie z.B. der Sprachübertragung, mehrfach, typischerweise aber doppelt genutzt werden.

Bei Mehrfachnutzung von Kanälen, wie sie prinzipiell beim GSM zur Verdoppelung der bedienbaren Teilnehmermenge unter dem Begriff des Halfrate-Codings für Sprechbetrieb eingeführt wurde, findet im gleichen Zeitschlitz des Rahmens eine pro Rahmen zeitlich alternierende Übertragung von komprimierten Blöcken für zwei unterschiedliche Funkverbindungen statt. Somit werden zwei unterschiedliche Verkehrskanäle über einen Zeitschlitz übertragen. Voraussetzung hierfür ist, daß die Nutzbitrate für eine Verbindung der halben Bitrate, die in einem Zeitschlitz maximal übertragen werden kann, entspricht. Zur Realisierung der Mehrfachnutzung wird die Nutzinformation des einzelnen Verkehrskanals für die Dauer von zwei Rahmen durch Zwischenspeicherung in einen Block zusammengefaßt und alternierend in jedem zweiten Zeitschlitz mit der doppelten Datengeschwindigkeit übertragen. Die Verdoppelung der Zahl der bedienbaren Teilnehmer erfolgt, ohne daß zusätzliche Funkgarnituren und Antennen installiert werden müssen.

Im Falle eines JD-City-Netzes oder bei WLL-Einrichtungen, bei denen die Bitrate z.B. verdoppelt wurde und damit eine Nutzbitrate pro Verkehrskanal von 26 kbit/s zur Verfügung steht, bedeutet dies eine Verdoppelung der pro JD-Sende/Empfangseinrichtung bedienbaren Teilnehmermenge von 64 auf 128 bei der GSM-Fullrate Sprachbitrate von 13 kbit/s. Wenn man dabei aber den GSM Halfrate-Coder mit einer Bitrate von 6,5 kbit/s einsetzt und den gleichen Zeitschlitz erst in jedem vierten Rahmen an den gleichen Teilnehmer vergibt, so ergibt sich eine Vierfachausnutzung der Funkeinrichtungen und es erhöht sich die Zahl der pro Sende/Empfangseinrichtung bedienbaren Teilnehmer auf 256, wodurch sich Mini-Basisstationen besonders wirkungsvoll realisieren lassen. Durch die Vierfachnutzung der Funkkanäle ergibt sich für den einzelnen Sprechkanal eine zusätzliche Sprachverzögerung von ca. 8 ms, die jedoch in Anbetracht der Grundverzögerung des digitalen Sprachwandelverfahrens von ca. 100 ms völlig vernachlässigbar ist.

In einer weiteren Ausprägung der Erfindung kann sinngemäß natürlich auch eine Dreifachausnutzung der Funkkanäle mit einer Sprachbitrate von 8 kbit/s angewendet werden, wobei 192 Sprechkanäle von einer Sende/Empfangseinheit bedient werden können.

Für die Breitbandübertragung von Daten in City-Netzen und WLL-Einrichtungen ergibt sich bei Bitratenverdopplung bereits eine übertragbare Datemmenge von 1,664 Mbit/s pro Rahmen bzw. Sende/Empfangseinrichtung, die bei Bitratenverdreifachung bereits auf 2,496 Mbit/s ansteigt.

Grundsätzlich kann die Mehrfachausnutzung von FM/TDMA-Funkkanälen, die als Multirate-Coding bezeichnet werden kann, in beliebigen anderen Systemauslegungen mit beliebigen anderen Parametern, entsprechend den auf dem Gebiet der Sprachcoder erzielten Fortschritte, angewendet werden.

Die Vorteile durch Einbringung des JD-CDMA-Verfahrens in FM/TDMA-Systemstrukturen führen nicht nur zu einer deutlichen Steigerung der Wirtschaftlichkeit für die Netzbetreiber und zur Erhöhung der Frequenzökonomie, sondern ermöglichen auch die Übertragung von Nutzbitraten bis > 2 Mbit/s.

Das Verfahren und die Anordnung gemäß der Erfindung werden im folgenden anhand von Ausführungsbeispielen näher erläutert.
Es zeigen:
- Fig. 1: die Rahmen-, Zeitschlitz- und Kanalstruktur des erfindungsgemäßen Verfahrens,
- Fig. 2: das Grundprinzip einer Duplex-Funkverbindung zwischen einer Basisstation und einer Teilnehmerstation,
- Fig. 3: ein Prinzip-Blockbild einer JD-GSM Sendeeinrichtung für Basisstationen für schmalbandige- und breitbandige Datenübertragung,
- Fig. 4: ein Prinzip-Blockbild einer hybriden TDMA-GSM- und JD-GSM-Sendeeinrichtung in einer Basisstation,
- Fig. 5: ein Prinzip-Blockbild einer hybriden TDMA-GSM- und JD-GSM-Empfangseinrichtung in einer Basisstation,
- Fig. 6: ein Prinzip-Blockbild eines Empfängers einer Dualmode Teilnehmerstation für TDMA-GSM- und JD-GSM-Schmalbandbetrieb und asymmetrischen ISDN-Betrieb,
- Fig. 7: ein Prinzip-Blockbild eines Empfängers einer Multimode Teilnehmerstation für TDMA-GSM-Betrieb und JD-GSM-Schmalband- und Breitbandbetrieb,
- Fig. 8: ein Prinzip-Blockbild eines Senders einer hybriden Dualmode Teilnehmerstation für TDMA-GSM- und JD-GSM-Schmalbandbetrieb bis 13 kbit/s,
- Fig. 9: ein Prinzip-Blockbild eines Senders einer Multimode Teilnehmerstation für TDMA-GSM-Betrieb und JD-GSM-Schmalband- und Breitbandbetrieb,
- Fig. 10: eine weitere Rahmen-, Zeitschlitz- und Kanalstruktur des erfindungsgemäßen Verfahrens,
- Fig. 11: die Rahmen-, Zeitschlitz- und Kanalstruktur des FD/TDMA-GSM, und
- Fig. 12: die Struktur der GSM-Blöcke und deren Einfügung in Zeitschlitze des Rahmens.

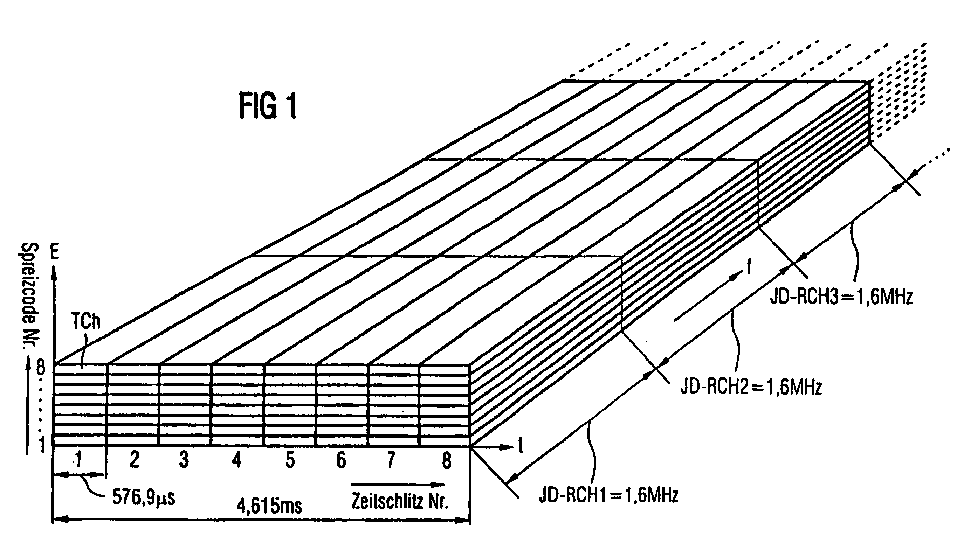

Die Zeitschlitz- und Rahmenstruktur des erfindungsgemäßen Verfahrens, das im folgenden als JD-GSM bezeichnet wird, ist in Fig. 1 dargestellt. Dem JD-CDMA-Verfahren entsprechend sind die pro Zeitschlitz gleichzeitig übertragenen gleichfrequenten acht Verkehrskanäle TCH, die mit acht unterschiedlichen Spreizcodes auf eine Bandbreite von 1,6 MHz gespreizt sind und parallel übertragen werden, energiemäßig übereinander dargestellt. In den acht Zeitschlitzen des JD-GSM und einer Bandbreite von 1,6 MHz können somit ebenfalls, wie im bekannten FD/TDMA-GSM nach Fig.11, das nunmehr als GSM bezeichnet wird, insgesamt 64 Verkehrskanäle TCH mit einer Nutzbitrate von je 13 kbit/s abgewickelt werden. Alternativ können in Übereinstimmung mit den Kanalzuteilungs- und Verbindungsabwicklungs-Mechanismen des GSM alle acht in einem Zeitschlitz übertragbaren Verkehrskanäle TCH mit einer Bitrate von 8 x 13 = 104 kbit/s an einen einzigen Teilnehmer vergeben werden.

Während das GSM für 64 Verbindungen acht Sende/Empfangseinrichtungen benötigt, braucht das JD-GSM für 64 Verbindungen mit 13 kbit/s nur eine einzige Sende/Empfangseinrichtung. Somit wird der Platzbedarf für die Sende/Empfangseinrichtungen in den Basisstationen in erster Näherung um etwa den Faktor acht reduziert.

Mit einer JD-GSM-Struktur nach FIG. 1 kann die im GSM vorgesehene Rahmen- und Zeitschlitzstruktur voll erhalten bleiben. Zur Einbringung der Systemelmente des JD-GSM in die GSM-Zeitschlitzanordnungen ist es jedoch erforderlich, daß mindestens ein zusammenhängender Kanalblock von acht GSM-Kanälen mit einer Gesamtbandbreite von 1,6 MHz zur Verfügung steht.

Die Übertragungskapazität eines Blocks kann nun entweder an maximal acht GSM-Teilnehmer mit je 13 kbit/s, oder, in anderer Aufteilung, z.B. einem Teilnehmer mit 65 = 64 + 1 kbit/s und drei Teilnehmern mit je 13 kbit/s, bzw. einem Teilnehmer mit 78 kbit/s = 64 + 14 kbit/s d.h. mit asymmetrischem ISDN-Anschluß und mit einem auf dem Funkweg von 16 kbit/s auf 14 kbit/s reduzierten Datenkanal für Supplementary Services (SS), oder in beliebiger anderer Kombination jeweils bis zur maximal möglichen Bitrate von 104 kbit/s pro Zeitschlitz und Rahmen an eine Verbindung zugeteilt werden. Der uneingeschränkte Mobilfunkbetrieb setzt hierbei lediglich voraus, daß im gesamten Mobilfunknetz eine hinreichende Anzahl von derartigen zusammenhängenden 1,6 MHz Frequenzbändern vorhanden ist, so daß auch Verbindungsumschaltungen, gemäß der im System vorgesehenen Prozeduren, erfolgen können.

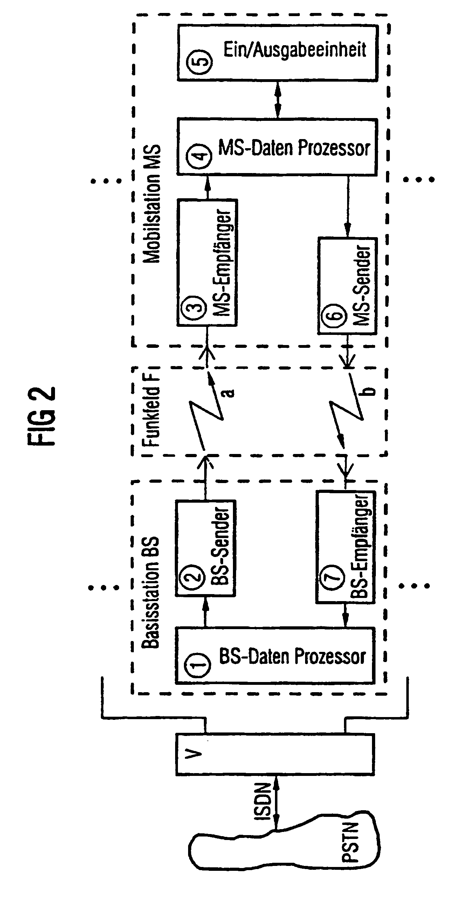

Ein Blockbild einer Duplex-Funkverbindung zwischen einer Basisstation BS und einer Mobilstation MS, die über das Funkfeld F stattfindet, ist in Fig. 2 dargestellt. Ein BS-Datenprozessor 1 der Basisstation BS ist über eine Vermittlungsstelle V des Funknetzes an ein Festnetz PSTN (Public Switched Telephone Network), beispielsweise das ISDN (Integrated Service Data Network) angeschlossen. In der Basisstation BS werden die ISDN-Datenformate nach der Aufteilung in 13 kbit/s Teildatenströme mittels des BS-Datenprozessors 1 in die für die Funkübertragung notwendigen Blockformate nach Fig. 12 umgewandelt und in die für die Übertragung auf dem Funkweg vorgesehenen Zeitschlitze in kontinuierlicher Rahmenfolge eingefügt. Ein solcher Übertragungsweg, der unterschiedlichen Teilnehmern zugeteilt werden kann, ist der Verkehrskanal TCH. Abhängig vom Übertragungsverfahren sind die Verkehrskanäle TCH unterschiedlich definiert. Beim GSM nach Fig. 11 stellt eine komprimierte, in den jeweils gleichen Zeitschlitz der periodischen Rahmenfolge eingefügte Blockfolge den Verkehrskanal TCH dar. Beim JD-CDMA nach Fig. 1 stellt eine auf den gleichen Zeitschlitz pro Rahmen komprimierte Blockfolge, die mit einem der acht unterschiedlichen CDMA-Codes in der Frequenzachse gespreizt und zusammen mit den sieben restlichen gespreizten Blockfolgen im gleichen Zeitschlitz gleichfrequent übertragen wird, den Verkehrskanal TCH dar. Die an eine Mobilstation MS gerichteten Nachrichten werden im Verkehrskanal TCH über einen Sender 2 der Basisstation BS, über die sogenannte Abwärtsrichtung a des Funkfeldes F zu einem Empfänger 3 der Mobilstation MS und schließlich über einen MS-Datenprozessor 4 zu einer Ein/Ausgabeeinheit 5 der Mobilstation MS übertragen.

In umgekehrter Richtung laufen die Nachrichten der Mobilstation MS an den anderen an der Verbindung beteiligten Teilnehmer, ebenfalls in einem Zeitschlitz des Rahmens eingeordnet, von der Ein/Ausgabeeinheit 5 über einen Sender 6, die Aufwärtsrichtung b des Funkfeldes F, einen Empfänger 7 in der Basisstation BS zum BS-Datenprozessor 1, der die Funkblockformate wiederum in ISDN-Datenformate rückgewandelt und in das ISDN überträgt. Typischerweise sind jeweils viele Mobilstationen MS an eine Basistation BS angeschlossen, deren Nachrichtenaustausch im Verbindungszustand prinzipgemäß über andere Verkehrskanäle TCH stattfindet.

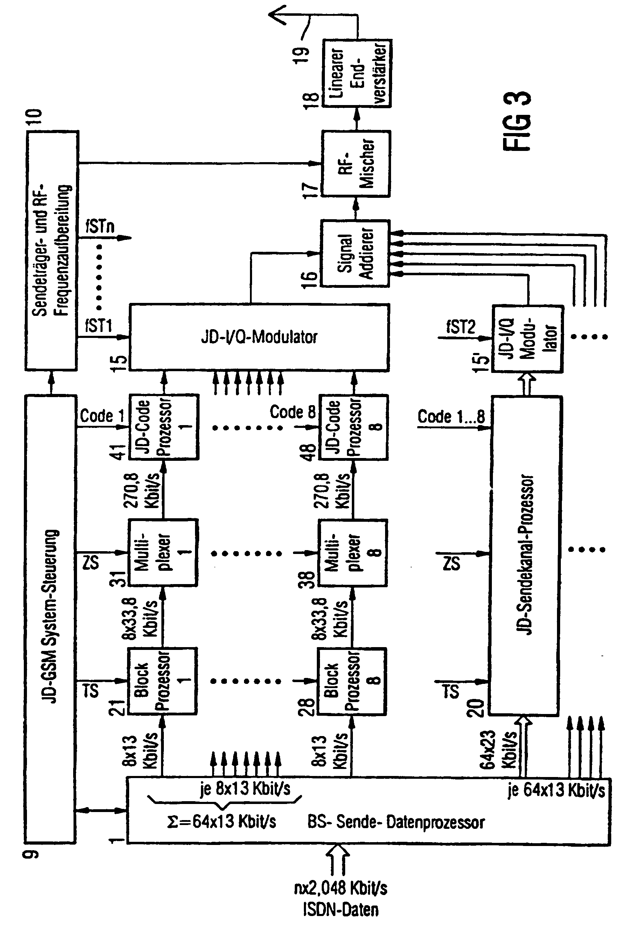

Die Fig. 3 zeigt ein Blockbild einer JD-GSM Sendeeinrichtung für Basisstationen BS, die für schmal- und breitbandige Datenübertragung geeignet sind. In der Verarbeitungseinheit 1 werden die je nach den Erfordernissen der einzelnen Verbindungen zu übertragenden Datenströme in jedem Fall auf die im GSM pro Zeitschlitz bzw. Verkehrskanal TCH maximal übertragbaren Einzeldatenstrtime von je 13 kbit/s aufgeteilt. An jeden von acht Blockprozessoren 21 bis 28 werden je acht 13 kbit/s-Datenströme entsprechend der Zeitschlitzzahl eines Rahmens geführt. Jeder Blockprozessor 21 bis 28 ist in jedem Zeitschlitz des Rahmens an den Verkehrskanal TCH mit der gleichen Spreizcodenummer, d.h. einer durch den Rahmen gehenden Schicht von Verkehrskanälen nach Fig. 1 zugeordnet. In den Blockprozessoren 21 bis 28 werden die Blöcke zunächst mit einer zeitlichen Länge von 4,615 ms nach Fig. 12 erstellt, d.h. die jeweilige Nutzinformation mit der notwendigen Redundanz versehen, zur Verteilung von Bündelfehlern interleaved und die Trainingssequenz TS eingefügt. Überdies werden auch die erforderlichen Zeitdauern A, E und G eingefügt. Die je acht blockformatierten Ausgangsströme der Blockprozessoren 21 bis 28 werden nachfolgend mit einer Bitrate von je 33,8 kbit/s an acht Multiplexer 31 bis 38 geführt, die die einzelnen Blöcke auf die Zeitschlitzlänge von 576,9 s komprimieren, in den zugeteilten Zeitschlitz des Rahmens einfügen und seriell mit einer Bitrate von 270,8 kbit/s ausgeben. Die Funktion jedes einzelnen dieser acht Blockprozessoren 21 bis 28 und Multiplexer 31 bis 38 entspricht der Funktion der im GSM pro Funkkanal RCH vorhandenen Einrichtungen.

Die acht bitsynchronen 270,8 kbit/s-Datenströme der Multiplexer 31 bis 38 werden in acht Codeprozessoren 41 bis 48 parallel mit den acht unterschiedlichen JD-Codes auf die Bandbreite von 1,6 MHz gespreizt und parallel an einen gemeinsamen JD-I/Q-Modulator 15 gegeben. Dort werden die gespreizten Signale pro Zeitschlitz synchron addiert und damit parallel auf einen Sende-Unterträger im Basisband mit der Frequenz fST1 moduliert. Dieser Sendeträger fST1 wird in der Träger- und Frequenzaufbereitungseinheit 10 erzeugt. Am Ausgang des Modulators 15 entstehen auf diese Weise die acht unterschiedlich codierten, aber gleichfrequenten und energiemäßig übereinander liegenden parallelen JD-GSM-Signale der frequenzmäßigen Breite des JD-Funkkanals RCH von 1,6 MHz, deren Folge von acht Zeitschlitzen den in Fig. 1 dargestellten Rahmen mit der übereinanderliegenden Struktur der Verkehrskanäle TCH bilden. Die Einheiten 1, 21 bis 28, 31 bis 38 und 41 bis 48 werden aus einer Steuereinheit 9 mit den notwendigen Systemtakten, Steuersignalen, Trainingssequenzen und Spreizcodes versorgt.

Ein JD-Funkkanal von 1,6 MHZ Breite stellt somit je Zeitschlitz acht Verkehrskanäle TCH in acht Zeitschlitzen und damit insgesamt 64 JD-Verkehrskanäle für 64 Fullrate-GSM-Teilnehmer von je 13 kbit/s Nutzinformation zur Verfügung. Entsprechend den Kanalzuteilungsregeln des GSM kann bei dem bisher dargestellten Funktionsumfang maximal die Verkehrskapazität eines Zeitschlitzes pro Rahmen mit acht JD-Verkehrskanälen von 8 x 13 kbit/s = 104 kbit/s an eine Datenverbindung vergeben werden. Die Verteilung der Datenströme von Verbindungen mit unterschiedlicher Datenrate auf die JD-Einzelkanäle wird durch Datenstrom-Steuersignale, die in den ISDN Daten eingebettet sind im Zusammenwirken mit der Steuereinheit 9 bewirkt.

Parallel zum bisher dargestellten Funktionsumfang ist im unteren Teil von Fig. 3 eine integrierte Lösung eines Multikanalprozessors dargestellt, der die entsprechenden Funktionsblöcke der oberen Darstellung zu einem JD-Sendekanal-Prozessor 20 zusammenfaßt. Dieser Sendekanal-Prozessor 20 wird mit 64 Kanälen von je 13 kbit/s durch die Verarbeitungseinheit 1 angesteuert, erstellt alle Blockstrukturen, komprimiert und spreizt die Blöcke und gibt pro Zeitschlitz ein Summensignal von je acht parallelen, bereits aufeinander addierten Spreizsignalen an den JD-I/Q Modulator 15' ab. Im Modulator 15' wird das Summensignal auf einen gegenüber dem Modulator 15 um das JD-Frequenzrastermaß von 1,6 MHz versetzten Sendeträger mit der Frequenz fST2 moduliert, so daß die beiden am Ausgang der Modulatoren 15 und 15' entstehenden JD-GSM-Spreizspektren frequenzmäßig unmittelbar nebeneinander liegen.

Mit einer solchen Anordnung von zwei nebeneinander liegenden JD-Funkkanälen RCh können, bei entsprechender Datensteuerung durch die Verarbeitungseinheit 1, im gleichen Zeitschlitz des Rahmens bereits mit Zuteilung von acht Verkehrskanälen TCH im ersten Funkkanal RCH und vier Verkehrskanälen TCH im zweiten Funkkanal RCH, 12 x 13 = 156 kbit/s übertragen werden und damit kann sowohl mobilen- wie auch ortsfesten WLL-Teilnehmern die volle ISDN-Übertragungskapazität von 144 kbit/s zur Verfügung gestellt werden.

Die Basisband-Sendeeinheit bestehend aus dem JD-Sendekanal-prozessor 20 und dem JD-Modulator 15' kann entsprechend der für eine Basisstation BS erforderlichen Verkehrskapazität als Modul mit 64 codegespreizten Verkehrskanälen TCH von je 13 kbit/s beliebig oft wiederholt werden. Dabei sind die Frequenzen der Sendeträger fST1 bis fSTn der Modulatoren pro Modul jeweils um die Schrittweite eines JD-Funkkanals RCH von 1,6 Mhz gestaffelt.

Die Ausgänge der JD-Modulatoren 15 und 15' werden in der Signal-Kleinleistungsebene über einen linearen Signaladdierer 16 zusammengefaßt, an dessen Ausgang nunmehr eine kontinuierliche Folge von zeitschlitz- und rahmensynchronen JD-Spreizspektren frequenzmäßig nebeneinander liegt. Die zusammengefaßten Signale werden in einem RF-Mischer 17 mit Hilfe einer hohen Trägerfrequenz fx in die gewünschte endgültige Radiofrequenzlage transponiert und mit einem linearen Leistungsverstärker 18 auf die für die Übertragung notwendige Sendeleistung gebracht und über eine Antenne 19 abgestrahlt.

Die Zahl der Signalquellen bzw. Basisbandmodule die auf einen Leistungsverstärker 18 gebündelt werden können, hängt ab von der für den einzelnen Kanal erforderlichen Sendeleistung und der Leistungsgrenze des Verstärkers 18. Sobald die Leistungsgrenze eines Verstärkers erreicht ist wird das nächste Kanalbündel auf einen weiteren Sendezweig mit einem Signaladdierer 16, einem RF (Hochfrequenz)-Mischer 17, einen Linearverstärker 18 gegeben und über eine Antenne 19 abgestrahlt.

Wenn nun die Zahl der parallelen Basisband-Module beispielsweise zehn oder 20 beträgt, so kann ein an einen Teilnehmer gerichteter Breitband-Datenstrom von beispielsweise 1024 oder 2048 kbit/s von der Verarbeitungseinheit 1 im Zusammenwirken mit der Steuereinheit 9 so gesteuert werden, daß dieser Datenstrom im selben Zeitschlitz des Rahmens, aber verteilt auf zehn bzw. 20 Basisband-Module mit je 8 x 13 = 104 kbit/s gleichzeitig gesendet wird. Somit ist die Breitbandübertragung modular in Schritten von 104 kbit/s gestaltbar und wird lediglich durch die in den Basisstationen BS zusammenhängend zugeteilten Frequenzbänder und/oder den maximal installierten Basisbandmodulen begrenzt.

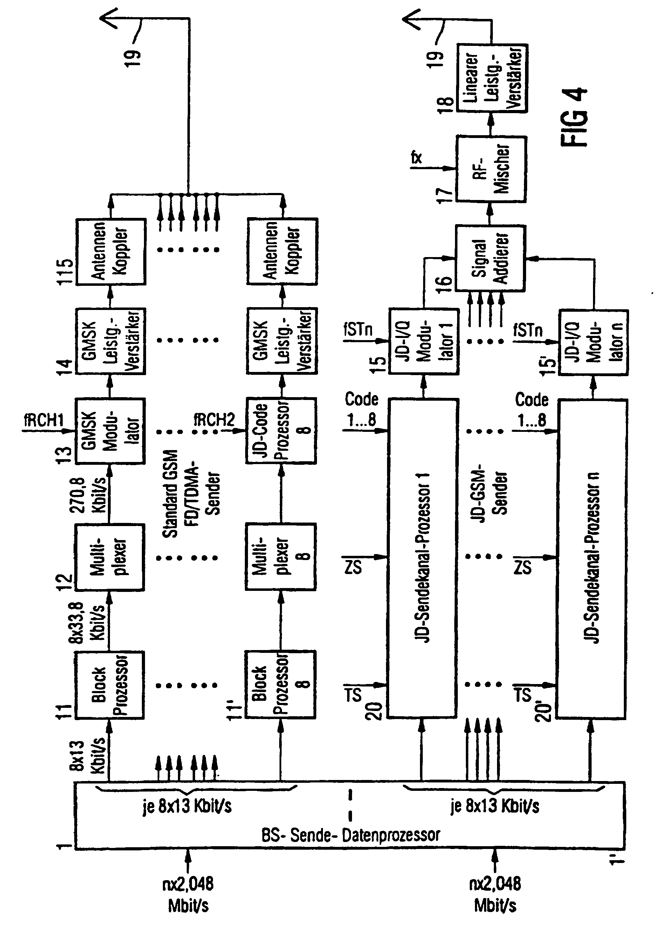

Die Fig. 4 zeigt ein Blockbild einer hybriden, mit FD/TDMA-GSM- und JD-GSM-Sendeeinrichtungen ausgestatteten Basisstation. Im oberen Teil von Fig. 4 sind die Sendeeinrichtungen des GSM und im unteren Teil diejenigen des JD-GSM dargestellt. Die Eingangs-Datenströme werden durch die Verarbeitungseinheiten 1 und 1' nach den Maßgaben der verschiedenen Diensterfordernisse und der vorgesehenen Übertragungsmöglichkeiten in jedem Fall in Teildatenströme von je 13 kbit/s zerlegt und in Bündeln von acht bzw. 64 Verkehrskanälen an die Blockprozessoren 11 und 20 geführt. Die Verarbeitungseinheiten 1 und 1' können auch als integrierte Einheit ausgeführt sein.

Jede Sendeeinrichtung des GSM, die aus dem Blockprozessor 11, dem Multiplexer 12, einem GMSK-Modulator 13, einem GSM-Leistungsverstärker 14 und einem als Filter ausgebildeten Antennenkoppler 115 besteht, überträgt pro einer solchen Sendeeinrichtung 8 x 13 kbit/s mit je einer Funkkanal-Bandbreite von 200 kHz, wie in Fig. 11 dargestellt. In Fig. 4 sind acht dieser voneinander unabhängigen Einrichtungen schematisch dargestellt, die in der Summe 8 x 8 = 64 Kanäle mit je 13 kbit/s übertragen können, wie es in Fig. 11 dargestellt ist.

Die im unteren Teil von Fig. 4 dargestellte JD-GSM-Sendeeinrichtung besitzt eine Reihe von JD-Sendekanalprozessoren 20 bis 20', von denen jeder, wie in Fig. 3 bereits beschrieben, 64 JD-Verkehrskanäle TCH mit je 13 kbit/s aufbereitet. Die gespreizten und aufaddierten Ausgangssignale der Sendekanalprozessoren 20 bis 20' werden mittels der JD-Modulatoren 15 bis 15' auf die um 1,6 MHz gestaffelten Basisbandträger fST1 bis fSTn moduliert und die dabei entstehenden Spektren im Signaladdierer 16 zusammengefaßt, über einen RF-Mischer 17 mittels eines RF-Trägers fx in die gewünschte Radiofrequenzlage umgesetzt und über einen einzigen linearen Leistungsverstärker 18 an die Antenne 19 geführt.

Da die Sendekanalprozessoren 20 bis 20' als integrierte Einheiten ausführbar sind und die Modulatoren 15 bis 15', der Signaladdierer 16 und der RF-Mischer 17 ebenfalls in der Signal-Kleinleistungsebene realisiert werden, ist der Raumbedarf für eine Kanaleinheit von 64 JD-Kanälen sehr gering. Da jedoch der lineare Leistungsverstärker 18, der die Antennenprobleme und die Probleme der Antennenkopplung wesentlich vereinfacht, eine anspruchsvolle Einrichtung ist, die deutlich mehr Raum einnimmt als ein GSM-Leistungverstärker für acht Kanäle sinkt der Raumbedarf für 64 JD-Sendekanäle auf den Raumbedarf von acht TDMA-Sendekanäle ab und ist somit um ca. den Faktor acht geringer.

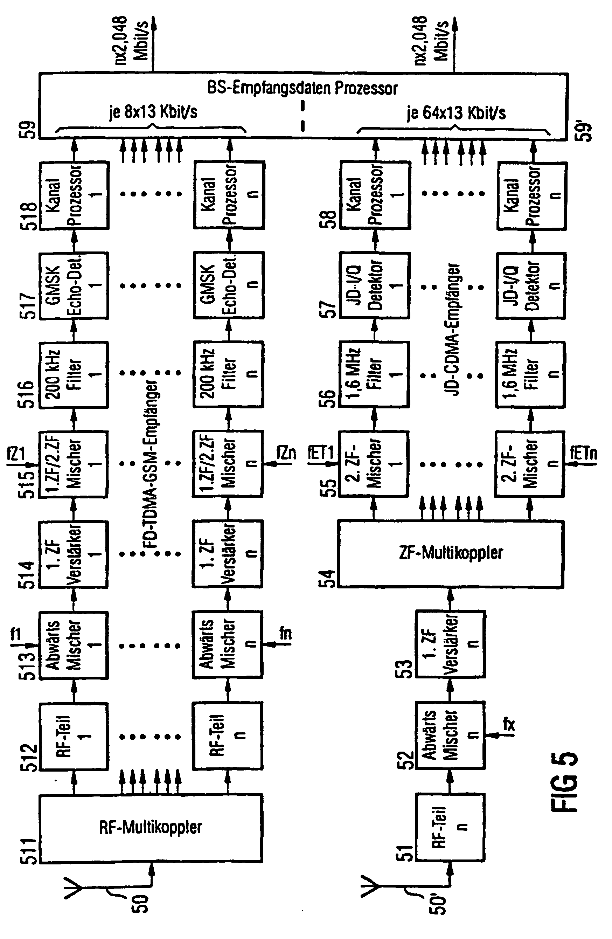

Die Fig. 5 zeigt in Analogie zur Fig. 4 ein Blockbild einer hybriden, mit GSM- und JD-GSM-Empfangseinrichtungen ausgestatteten Basisstation BS. Die im oberen Teil dargestellten konventionellen GSM-Empfangseinrichtungen besitzen am Fußpunkt der Empfangsantenne 50 einen RF-Multikoppler 511, der die Antennensignale an die einzelnen 200 kHz breiten Empfangszüge verteilt. Jeder Empfangszug, der für den Empfang von acht TDMA-GSM Kanälen nach Fig. 11 ausgelegt ist, besteht in bekannter Weise aus einem RF-Teil 512, einem Abwärtsmischer 513, einem ersten Zwischenfrequenz-Mischer 514, einem Mischer 515, der die erste Zwischenfrequenz in die zweite Zwischenfrequenz umsetzt, einem 200 kHz-Filter 516, einem echoentzerrenden Signaldetektor 517 und dem Kanalprozessor 518, der die acht Nutzsignale von je 13 kbit/s wieder aus den Empfangssignalen extrahiert. Die Nutzsignale werden zu einer Empfangs-Verarbeitungseinheit 59 geführt und dort in die ISDN-Datenformate zur weiteren Übertragung ins ISDN-Netz umgesetzt.

Die im unteren Teil dargetellten JD-GSM-Empfangseinrichtungen besitzen pro Basisstation BS eine Empfangsantenne 50', an deren Fußpunkt ein einziger RF-Teil 51 angeordnet ist. Dies ist möglich, weil entsprechend dem JD-System alle von den Mobilstationen MS eintreffenden Empfangssignale innerhalb eines Variationsbereichs von <30 db liegen und relativ nahe an der Grenzempfindlichkeit empfangen werden. Somit wird der RF-Teil 51 nie von einem einzelnen Signal stark beaufschlagt. Dem RF-Teil 51 folgt ein Abwärtsmischer 52, der die Empfangssignale in die Ebene der ersten Zwischenfrequenz umsetzt. Die Ausgangssignale des ersten Mischers 52 werden über einen ersten ZF-Verstärker 53 auf einen ZF-Multikoppler 54 geführt, an den alle weiteren 1 bis n JD-Empfänger der Basisstation BS angeschlossen sind.

Die parallelen 1 bis n JD-Empfangszüge, von denen jeder 64 JD-Kanäle mit je 13 kbit/s Nutzinformation innerhalb einer Bandbreite von 1,6 MHz empfängt, bestehen aus einer Anordnung von 1 bis n Mischern 451 bis 45n mit je einem nachgeschalteten 1,6 MHz Filter 461 bis 46n. Jeder Mischer 55 wird mit einer separaten, um je 1,6 MHz gestaffelten Empfangsträgerfrequenz fET1 bis fETn versorgt und damit stehen die um 1,6 MHz gestaffelten, unmittelbar nebeneinander liegenden Empfangssignale am Ausgang der Filter 56 getrennt, aber in gleichen Frequenzlage zur Verfügung. Den Filtern 56 nachgeschaltet sind JD-Detektoren 57, die unter Berücksichtigung der Mehrwegeausbreitung die Signalinhalte detektieren und die Regelkriterien für die Sendeleistungsregelung der jeweils empfangenen Endeinrichtungen erzeugen. In den nachfolgenden Kanalprozessoren 58 werden die 64 pro Kanal empfangenen Nutzsignale extrahiert und zu einer Empfangs-Verarbeitungseinheit 59' geführt. In dieser werden die Einzeldatenströme je nach den Erfordernissen der einzelnen Verbindungen bzw. Servicearten zusammengesetzt und zum ISDN geleitet. Die Empfangs-Verarbeitungseinheiten 59 und 59' können ebenfalls als integrierte Einheit ausgeführt sein.

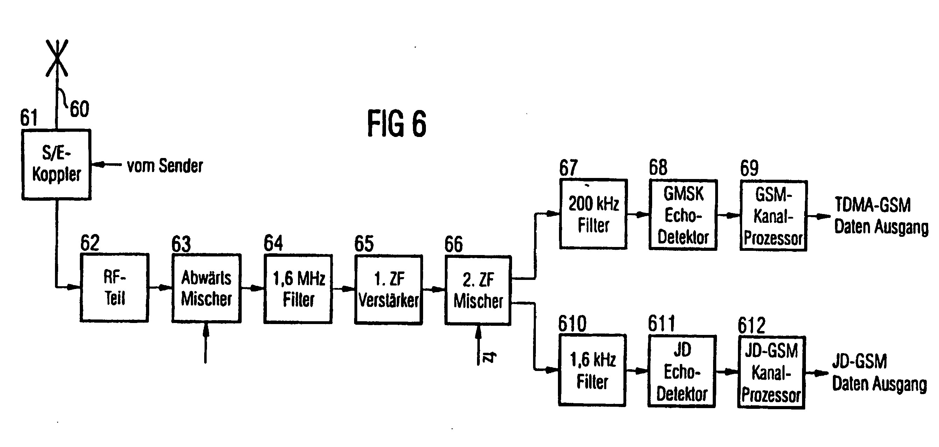

Ein Blockbild eines Empfängers einer "Dualmode"-Teilnehmerstation, die typischerweise eine Mobilstation MS ist und sowohl für GSM-Betrieb wie auch JD-GSM-Schmalband- und asymmetrischen ISDN-Betrieb ausgelegt ist, ist in Fig. 6 in seinen wesentlichen Komponenten dargestellt. Das von einer Antenne 60 kommende Empfangssignal erreicht über einen Sende/Empfangskoppler 61, einen RF-Teil 62 einen Abwärtsmischer 63. Das RF-Teil 62 und der Abwärtsmischer 63 entsprechen funktionell, aber in anderer Frequenzlage, den entsprechenden Basisstationseinrichtungen in Fig. 5. Am Ausgang des Abwärtsmischers 63 und unmittelbar vor einem ersten ZF-Verstärker 65 ist ein erstes 1,6 MHz Filter 64 zur Bandbegrenzung vorgesehen.

Dem ZF-Verstärker 65 folgt ein zweiter Mischer 66, der die Umsetzung von der ersten hohen ZF in eine zweite niedrige ZF vornimmt. Am Ausgang des Mischers 66 wird der Empfangsweg in zwei getrennte Wege aufgetrennt, die über einen Steuerbefehl je nach Betriebsart "FD/TDMA-GSM" oder "JD-GSM" alternativ aktivierbar sind.

Im oberen Zweig, der dem Empfang der GSM-Signale dient, wird zunächst die Bandbreite mittels eines Filters 67 auf 200 kHz eingeengt. Nach dem Filter 67 ist ein echoentzerrender GMSK-Signaldetektor 68 angeordnet, der die detektierten Nutzsignale an einen GSM-Kanalprozessor 69 gibt. Am Ausgang des Kanalprozessors 69 stehen wiederum die aus den Empfangssignalen extrahierten Nutzdaten des für die Verbindung zugeteilten Verkehrskanals TCH am GSM-Datenausgang zur Verfügung.

Alternativ zum oberen Kanal ist der untere Kanal für den Empfang von JD-GSM-Signalen ausgelegt. Hierzu ist in der zweiten ZF-Lage ein weiteres 1,6 MHz Filter 610, ein JD-Detektor 611 und ein JD-Kanalprozessor 612 vorgesehen, der den JD-GSM-Datenausgang JD mit den aus dem zugeteilten JD-Funkkanal extrahierten Daten versorgt. Am JD-GSM-Datenausgang JD kann entsprechend den Zeitschlitz-Zuteilungsmöglichkeiten entweder ein Einzelkanal mit 13 kbit/s oder jeweils in Schritten von 13 kbit/s ein ganzer JD-Block, bestehend aus der Summe von acht JD-Verkehrskanälen mit einer maximalen Übertragungskapazität von 104 kbit/s an eine Mobilstation MS übertragen werden. Somit ist bereits mit dieser Realisierung einer Dualmode-Mobilstation MS in fünf Verkehrskanälen die direkte Übertragung einer Datenrate von 64 kbit/s (5 x 13 = 64 + 1 kbit/s) und in sieben Codekanälen eine Übertragung nach dem asymmetrischen ISDN-Protokoll von 64 + 16 kbit/s (7 x 13 = 64 + 16 + 12 kbit/s) realisierbar. Mit der Einrichtung eines speziellen ISDN-Steuerkanals in der Sende-Verarbeitungseinheit 1 nach Fig. 3 und Fig. 4, der die Bitrate für die verbindungsbegleitenden Dienste (Supplementary Services) des ISDN von 16 kbit/s auf 14 kbit/s für die Funktibertragung reduziert, kann asymmetrischer ISDN-Betrieb bereits mit sechs JD-Verkehrskanälen (6 x 13 = 64 + 14 kbit/s) unter Einsparung der Kapazität eines Verkehrskanals realisiert werden.

Die in Fig. 6 dargetellte Teilnehmer-Empfangseinrichtung kann für Endgeräte, vorzugsweise für Handheld-Geräte, unter Einsparung von Batterieleistung, alternativ zum GSM Betrieb, natürlich auch als einkanalige JD-GSM-Empfangseinrichtung schmalbandig betrieben werden. Es kann bei dieser Einrichtung die aus den Detektoren 68 und 58, sowie den Kanalprozessoren 69 und 59 bestehende Anordnung als integrierte Prozessoreinheit ausgebildet sein.

Eine reine JD-Dualmode-Teilnehmereinrichtung, die ausschließlich für JD-Schmalband- Betrieb und asymmetrischen ISDN-Betrieb geeignet ist, entspricht der in Fig. 6 dargestellten Anordnung, jedoch ohne die für das FD/TDMA-GSM notwendigen Funktionsblöcke 67, 68 und 69.

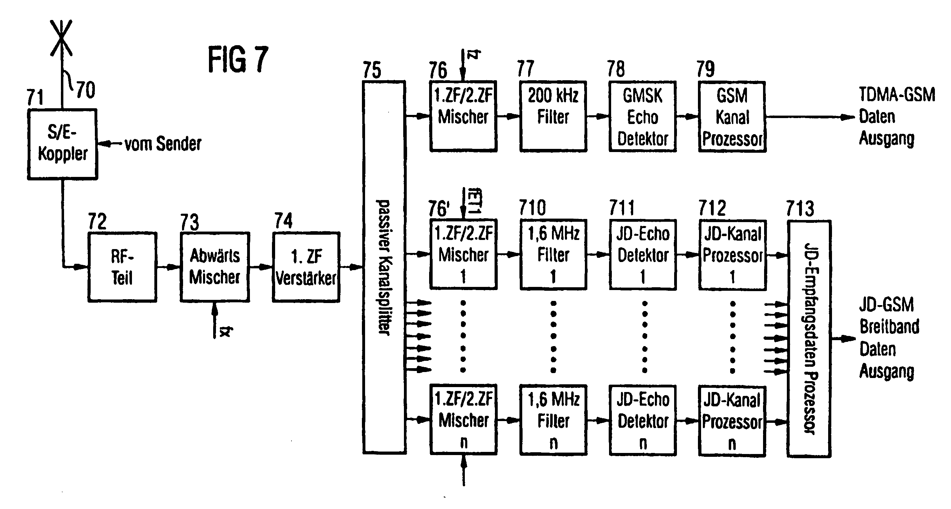

Die Fig. 7 zeigt ein Blockbild eines Empfängers einer "Multimode-Teilnehmereinrichtung" für GSM-Betrieb sowie JD-GSM-Einzelkanal- bzw. Schmalband- und Breitbandbetrieb. Der Sende/Empfangskoppler 71, der RF-Teil 72 und der Abwärtsmischer 73 entsprechen den in Fig. 6 dargestellten Einrichtungen. Der erste ZF-Verstärker 74 ist in seiner Bandbreite für das breiteste zu übertragende JD-GSM-Band ausgelegt. Im Falle der Übertragung einer maximalen Nutzbitrate von z.B. 2,048 Mbit/s bedeutet dies, daß, pro Rahmen im selben Zeitschlitz nach Fig. 1, in 20 nebeneinander liegenden Funkkanälen RCH von je 1,6 MHz je 104 kbit/s mit einer Gesamtbandbreite von 32 MHz übertragen werden und somit die Bandbreite des ersten ZF-Verstärkers 74 32 MHz betragen muß. Für geringere Nutzbitraten kann diese Bandbreite entsprechend eingeengt werden. Dem ZF-Verstärker 74 folgt ein passiver Kanalsplitter 75, der die ZF-Signale auf die unterschiedlichen Signalverarbeitungskanäle verteilt. Der obere Kanal besteht aus dem Mischer 76, der die erste hohe ZF in eine tiefe ZF-Lage umsetzt und den GSM-Einheiten 67, 68 und 69 in Fig. 6 entsprechen, mit einer maximalen Datenübertragungskapazität von 13 kbit/s. Im unteren Bereich von Fig. 7 sind 1...n JD-Signalverarbeitungskanäle, maximal z.B. 20, angeordnet. Die dem Kanalsplitter 75 folgenden n Mischer 76' werden wiederum mit n um je 1,6 MHz gestaffelten Empfangsträgerfrequenzen fET1 bis fETn aus einer nicht dargetellten Frequenzaufbereitungseinheit entsprechend der Einheit 10 in Fig. 3 versorgt, wobei die Zahl der jeweils aktivierten Signalverarbeitungskanäle der für den gewünschten Service erforderlichen Bandbreite entspricht. Die weiteren Einheiten der parallelen Signalverarbeitungskanäle 710, 711, und 712 entsprechen wiederum der in Fig. 6 beschriebenen Einrichtung. Die Ausgänge der JD-Kanalprozessoren 712, die jeweils nur einen einzelnen JD-Block mit maximal 104 kbit/s auswerten, sind an die Empfangs-Verarbeitungseinheit 713 geführt, wo je nach gewünschtem Service ein schmalbandiger Einzelkanal von 13 kbit/s oder in Schritten von 13 kbit/s gestaffelt, der gewünschte Breitbanddatenstrom an die an der Teilnehmereinrichtung angeschlossenen Ein/Ausgabeeinheit ausgegeben werden kann.

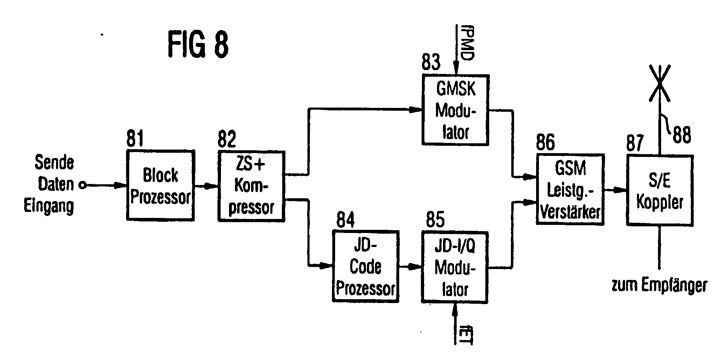

Die Fig. 8 zeigt ein Prinzip-Blockbild eines Senders einer hybriden Dualmode-Teilnehmereinrichtung für GSM und JD-GSM-Schmalbandbetrieb bis 13 kbit/s. Der kontinuierliche Sendedatenstrom von 13 kbit/s wird zum Blockprozessor 81 geführt. Im Blockprozessor 81 werden die Funkblöcke nach Fig. 12 erstellt. Der blockformatierte Ausgangsstrom des Blockprozessors 81 wird nachfolgend mit einer Bitrate von 33,8 kbit/s an einen Zeitschlitz-Kompressor 82 geführt, wo der Block auf die Dauer eines Zeitschlitzes komprimiert und entsprechend der Zeitschlitzzuteilung in den Rahmen eingefügt und mit einer momentanen Bitrate von 270,8 kbit/s ausgegeben wird. Die Ausgangssignale des Zeitschlitz-Kompressors 82 sind, im GSM-Betrieb zum GSMK-Modulator 83 geführt, dort auf einen RF-Träger moduliert und zum GSM-Leistungsverstärker 86 geleitet. Im Falle des JD-GSM- Betriebs ist der untere Sendezweig in Fig. 8 aktiviert. Nunmehr läuft das Ausgangssignal des Zeitschlitz-Kompressors 82 über den JD-Codeprozessor 84, wo es gespreizt wird, zum JD-Modulator 85, wird dort auf einen RF-Träger moduliert und erreicht den GSM-Leistungsverstärker 86. Das Ausgangssignal des Verstärkers 86 wird über den Sende/Empfangskoppler 87 zur Antenne 88 der Teilnehmerstation geführt.

Bei einer Anordnung nach Fig. 8 können die Einheiten Blockprozessor 81, Zeitschlitz-Kompressor 82 und JD-Codeprozessor 84 sowie die Funktionsblöcke GMSK-Modulator 83 und JD-Modulator 85 zu integrierten Einheiten zusammengefaßt werden. In dieser Ausführung der Sendeeinrichtung kann vorteilhafterweise der konventionelle nichtlineare aber stromsparende GSM-Leistungsverstärker 86 auch für JD-GSM-Betrieb benutzt werden. Dies ist möglich, soweit jeweils nur ein einzelner JD-Codekanal in einem Zeitschlitz übertragen wird und deshalb Intermodulationsprodukte, wie sie bei der Aussendung mehrerer paralleler Signale in nichtlinearen Verstärkern entstehen, nicht auftreten. Die Tatsache, daß ein größerer und mehr energieverbrauchender Linearverstärker für den Einkanal-JD-GSM- Betrieb entbehrlich ist, ist für die Masse der Handheld-Geräte, die keine Breitbandübertragung brauchen, von Vorteil, weil mit ihnen alle GSM-Sprach- und Datendienste in den beiden Betriebsarten GSM und JD-GSM übertragbar sind.

In einer speziellen erfindungsgemäßen Ausführung der Teilnehmereinrichtung ist es möglich, die in Fig. 8 dargestellte ausschließlich einkanalige TDMA- und JD-Sendeeinrichtung mit einer Empfangseinrichtung nach Fig. 6, die den gleichzeitigen Empfang von maximal acht JD-Codekanälen erlaubt, zu kombinieren. Eine solche Einrichtung ist für einen asymmetrischen Datenverkehr geeignet, bei dem z.B. eine Mobilstation eine zentrale Datei mit maximal 13 kbit/s abfragt und die gewünschten Daten mit der hohen Geschwindigkeit von 104 kbit/s in kurzer Zeit übertragen werden kann.

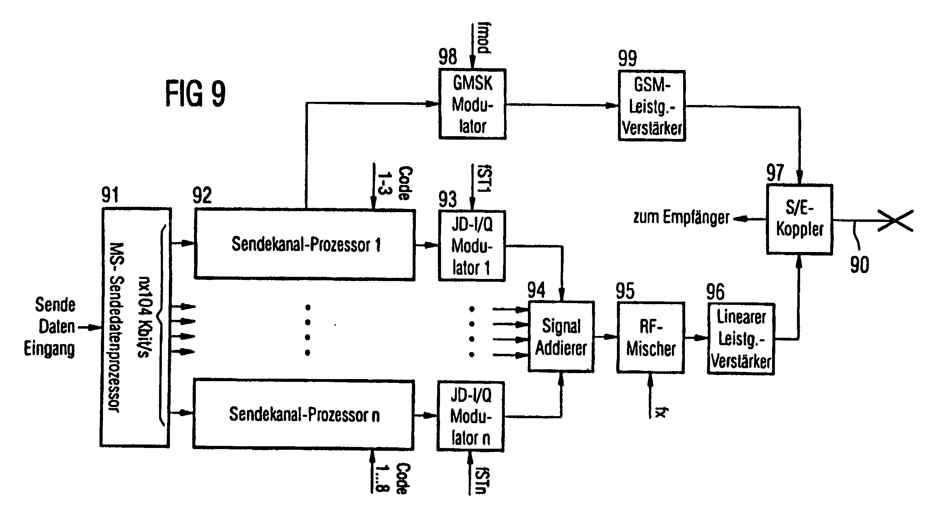

Fig. 9 zeigt in Ergänzung zu Fig. 7 ein Blockbild eines Senders einer Multimode-Teilnehmereinrichtung für GSM-Übertragung, wie auch für JD-GSM-Schmalband- und für gestaffelte Breitbandübertragung bis 2048 kbit/s. Der Dateneingang des Senders ist zu einer Sende-Verarbeitungseinheit 91 geführt, wo die dem jeweiligen Service- und Übertragungsmodus entsprechenden Daten koordiniert in 13 kbit/s-Ströme zerlegt und an die in Fig. 3 und 4 beschriebenen Sendekanalprozessoren 92 geführt werden, in denen die Blockbildung, die Multiplexbildung und die Spreizung mit den JD-Codes erfolgt. Die gespreizten Signale werden dann wiederum in den Modulatoren 93 auf die um je 1,6 MHz gestaffelten Trägerfrequenzen fST1 bis fSTn moduliert und im Signaladdierer 94 zusammengefaßt. Nach der Umsetzung in die RF-Ebene mittels eines RF-Trägers fx im RF-Mischer 95 durchläuft das Signal den linearen Leistungsverstärker 96, sowie den Sende/Empfangskoppler 97 und wird über die Antenne 90 abgestrahlt. Eine solche JD-Sendeeinrichtung besitzt minimal einen und maximal 20 Sendekanalprozessoren 92, von denen in den diversen Betriebszuständen der unterschiedlichen Dienste jeweils die erforderliche Anzahl von Sendeprozessoren aktiviert wird. Jeder Sendkanalprozessor 92 besitzt nach der Block- und Multiplexbildung einen Ausgang an dem im TDMA-GSM Betrieb ein konventioneller GSMK-Modulator 98 angeschlossen wird und das Signal über einen konventionellen GSM-Leistungsverstärker 99 und den Sende/Empfangskoppler 97 zur Antenne 90 geführt wird. Die Anwesenheit einer separaten GSM-Leistungsstufe 99 für FD/TDMA-Betrieb ist gerechtfertigt durch ihren geringen Platz- und Leistungsbedarf, der in Anbetracht der für Breitbandbetrieb erforderlichen Leistungsstufe 96 nicht besonders ins Gewicht fällt. Die in den Fig. 9 und Fig. 7 dargestellte Anordnung läßt sich aus der Sicht des Platz- und Leistungsbedarfs der linearen Endstufe 96 in einem kleinen Handy nicht ohne weiteres realisieren.

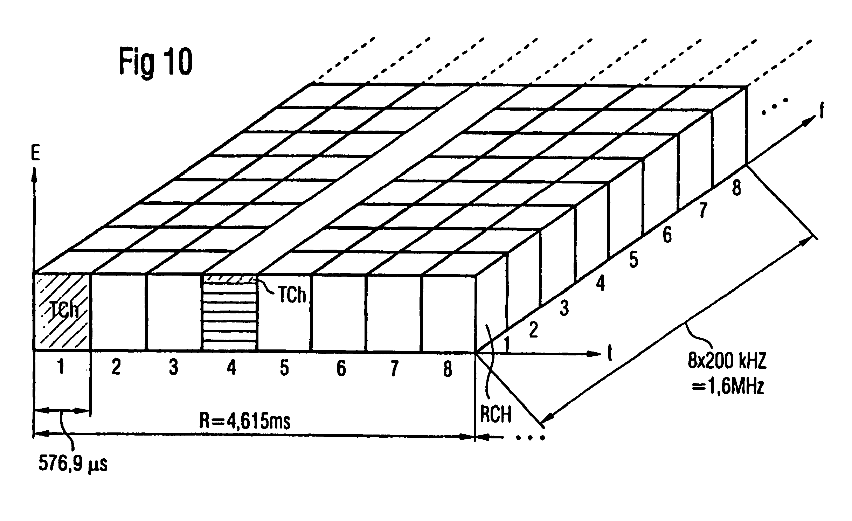

Mit beiden Teilnehmer-Sende/Empfangseinrichtungen, nach den Fig. 6 und 8, wie auch nach den Fig. 7 und 9, sowie mit der Basisstations-Einrichtung nach den Fig. 3, 4 und 5 läßt sich auch ein innerhalb eines GSM-FD/TDMA-Rahmens eingefügter alternativer JD-GSM-Betrieb nach Fig.10 mit mindestens einem in die GSM-FD/TDMA-Rahmenstruktur eingefügten JD-CDMA Element durchführen.

In der Fig. 10 ist beispielhaft im Zeitschlitz 4 ein JD-CDMA-Kanal mit einer Bandbreite entsprechend acht GSM-Kanälen eingebettet.

## Patentansprüche

1. Anordnung zur Funkübertragung von digitalen Daten in einem Funknetz,
wobei im Funknetz die Übertragung unter Verwendung von Zeitschlitzen eines Zeitmultiplexrahmens (R) und ersten und/oder zweiten Frequenzbändern eines vorgegebenen Frequenzbereichs (JD-RCH) erfolgt,
wobei die ersten Frequenzbänder schmal- und die zweiten Frequenzbänder breitbandig sind,
wobei die breitbandigen Frequenzbänder zur Teilnehmerseparierung zusätzlich ein CDMA (Code Division Multiple Access)-Verfahren nutzen,
mit einem Sender und einem Empfänger, die einen GSM-Modus in dem schmalbandigen Frequenzband und einen TDMA/CDMA-Modus in dem breitbandigen Frequenzband unterstützen,
wodurch eine schrittweise gestaffelte Übertragung für variable Bitraten ermöglicht wird,
**dadurch gekennzeichnet, dass**
der Empfänger mehrere Empfangskanalprozessoren (79, 712) und
der Sender mehrere Sendekanalprozessoren (92) enthalten, die für mehrere Kanäle innerhalb der ersten und/oder zweiten Frequenzbänder eine parallele Verarbeitung vorsehen.

2. Anordnung nach Anspruch 1, bei der
sich die ersten Frequenzbänder eine Untermenge der zweiten Frequenzbänder bilden.

3. Anordnung nach einem der vorherigen Ansprüche,
deren Sender einen Sendedatenprozessor enthält, der sowohl die im GSM-Modus als auch die im TDMA/CDMA-Modus übertragenen Daten verarbeitet.

4. Anordnung nach einem der vorherigen Ansprüche,
deren Empfänger einen Empfangsdatenprozessor enthält, der sowohl die im GSM-Modus als auch die im TDMA/CDMA-Modus übertragenen Daten verarbeitet.

5. Anordnung nach einem der vorherigen Ansprüche,
mit einer gemeinsamen Antenne für die Empfangs- und Sendesignale der ersten und zweiten Frequenzbänder.

6. Anordnung nach Anspruch 5,
mit einer gemeinsamen Verstärkerstufe für die Empfangssignale der ersten und zweiten Frequenzbänder.

7. Anordnung nach einem der Ansprüche 1 bis 4,
mit getrennten Antennen für die Empfangs- und Sendesignale der ersten und zweiten Frequenzbänder.

8. Anordnung nach einem der vorherigen Ansprüche, bei der
der Empfänger gemeinsame Module (62 bis 66) sowohl für den GSM-Modus als auch für den TDMA/CDMA-Modus enthält, die auf unterschiedliche Trägerfrequenzen einstellbar sind und getrennte Module (67 bis 69 und 610 bis 612) enthält, die auf einen der zwei Modi (GSM, TDMA/CDMA) einstellbar sind.

9. Anordnung nach einem der vorherigen Ansprüche,
der Sender gemeinsame Module (86) sowohl für den GSM-Modus als auch für den TDMA/CDMA-Modus enthält, die auf unterschiedliche Trägerfrequenzen einstellbar sind und getrennte Module (83 und 84, 85) enthält, die auf einen der zwei Modi (GSM, TDMA/CDMA) einstellbar sind.

10. Anordnung nach einem der vorherigen Ansprüche,
die als Basisstation (BS) ausgebildet ist.

11. Anordnung nach einem der Ansprüche 1 bis 9,
die als Teilnehmerstation (MS) ausgebildet ist.

12. Anordnung nach Anspruch 11, wobei
die Teilnehmerstation als ortsfeste Teilnehmerstation ausgebildet ist, die an das Funknetz nach Art einer sogenannten Wireless Local Loop (WLL) angeschlossen ist.

13. Anordnung nach einem der vorherigen Ansprüche, bei der im Sender breitbandige Nutzdaten in Datenteilströme zerlegt, redundanzcodiert, in Blockform gebracht, anschließend gespreizt, in die zugeteilten Zeitschlitze eingefügt und in einer Basisband-Frequenzlage auf mindestens einen JD-Unterträger aufmoduliert werden, und die breitbandigen Basisband-Summensignale in die gewünschte Radiofrequenzlage gebracht und im vorgesehenen Zeitschlitz breitbandig über einen einzigen RF-Leistungsverstärker ausgesendet werden.

14. Anordnung nach einem der vorherigen Ansprüche, bei der
im Empfänger ein Breitbandsignal in die Frequenzlage der Zwischenfrequenz abgemischt und der Zwischenfrequenzverstärker auf die für die Breitbandübertragung erforderliche Bandbreite eingestellt wird, und am Ausgang des Zwischenfrequenzteils eine modulare JD-Detektionseinheit die JD-Unterträgersignale detektiert und über eine Datenprozessor-Anordnung wieder in den ursprünglichen hochbitratigen Datenstrom zurückwandelt.

15. Anordnung nach einem der vorherigen Ansprüche, bei der
im Sender eine Mehrzahl von Signalquellen in der Kleinleistungsebene zusammengefasst und über einen einzigen linearen Sendeverstärker ohne Antennenkoppler auf eine einzige Antenne geführt werden.

16. Anordnung nach einem der vorherigen Ansprüche, bei der
in den Zeitschlitzen übertragene Blockformate bezüglich Zeitraster, Datenrate und Trainingssequenz so ausgelegt sind, dass die durch Mehrwegeausbreitung entstehenden Echoverzerrungen der Funksignale auch bei relativ langen Umwegen berücksichtigt werden.

17. Anordnung nach einem der vorherigen Ansprüche, bei der bei relativ geringen Signalverzögerungen die Zeitschlitz- und Rahmenlänge der JD-CDMA-Strukturen unter vollständiger Beibehaltung des bekannten Blockaufbaus durch entsprechende Erhöhung der Bitrate, der Taktfrequenzen und der Bandbreite des JD-Funkkanals in der Zeitachse um einen bestimmten Faktor komprimiert werden.

## Claims

1. Arrangement for the radio transmission of digital data in a radio network,
with transmission taking place in the radio network using time slots of a time multiplex frame (R) and first and/or second frequency bands of a predetermined frequency range (JD-RCH), with the first frequency bands being narrowband and the second frequency bands being broadband,
with the broadband frequency bands also using a CDMA (Code Division Multiple Access) method for subscriber separation, with a transmitter and receiver, supporting a GSM mode in the narrowband frequency band and a TDMA/CDMA mode in the broadband frequency band,
thereby allowing a gradually staggered transmission for variable bit rates,
**characterised in that**
the receiver contains a number of receive channel processors 79, 712) and the transmitter contains a number of transmit channel processors (92), which provide parallel processing for a number of channels within the first and/or second frequency bands.

2. Arrangement according to claim 1, wherein
the first frequency bands form a sub-set of the second frequency bands.

3. Arrangement according to one of the preceding claims,
the transmitter of which contains a transmit data processor, which processes both the data transmitted in GSM mode and the data transmitted in TDMA/CDMA mode.

4. Arrangement according to one of the preceding claims,
the receiver of which contains a receive data processor, which processes both the data transmitted in GSM mode and the data transmitted in TDMA/CDMA mode.

5. Arrangement according to one of the preceding claims,
with a common antenna for the receive and transmit signals of the first and second frequency bands.

6. Arrangement according to claim 5,
with a common amplifier stage for the receive signals of the first and second frequency bands.

7. Arrangement according to one of claims 1 to 4,
with separate antennas for the receive and transmit signals of the first and second frequency bands.

8. Arrangement according to one of the preceding claims, wherein the receiver contains common modules (62 to 66) both for GSM mode and for TDMA/CDMA mode, which can be set to different carrier frequencies, and contains separate modules (67 to 69 and 610 to 612), which can be set to one of the two modes (GSM, TDMA/CDMA).

9. Arrangement according to one of the preceding claims, [wherein] the transmitter contains common modules (86) both for GSM mode and for TDMA/CDMA mode, which can be set to different carrier frequencies, and contains separate modules (83 and 84, 85), which can be set to one of the two modes (GSM, TDMA/CDMA).

10. Arrangement according to one of the preceding claims, which is configured as a base station (BS).

11. Arrangement according to one of claims 1 to 9,
which is configured as a subscriber station (MS).

12. Arrangement according to claim 11,
with the subscriber station being configured as a fixed subscriber station, which is linked to the radio network in the manner of what is known as a Wireless Local Loop (WLL).

13. Arrangement according to one of the preceding claims, wherein in the transmitter broadband payload data is broken down into data sub-streams, redundancy coded, converted to block form, then spread, inserted into the allocated time slots and modulated in a baseband frequency position to at least one JD sub-carrier and the broadband baseband overall signals are moved to the required radio frequency position and transmitted in a broadband manner in the time slot provided by way of a single RF power amplifier.

14. Arrangement according to one of the preceding claims, wherein in the receiver a broadband signal is mixed to the frequency position of the intermediate frequency and the intermediate frequency amplifier is set to the bandwidth required for broadband transmission and at the output of the intermediate frequency element a modular JD detection unit detects the JD sub-carrier signals and converts them back to the original high bit rate data stream by way of a data processor arrangement.

15. Arrangement according to one of the preceding claims, wherein in the transmitter a number of signal sources are combined in the low-power level and conducted to a single antenna by way of a single linear transmit amplifier without an antenna coupler.

16. Arrangement according to one of the preceding claims, wherein block formats transmitted in the time slots are configured such in respect of time frame, data rate and training sequence that the echo distortion of the radio signals resulting due to multipath propagation is also taken into account with relatively long re-routing.

17. Arrangement according to one of the preceding claims, wherein with relatively short time delays the time slot and frame length of the JD-CDMA structures are compressed by a specific factor, by correspondingly increasing the bit rate, clock frequencies and bandwidth of the JD radio channel in the time axis, whilst fully maintaining the known block structure.

## Revendications

1. Agencement pour la transmission radio de données numériques dans un réseau radio, la transmission dans le réseau radio s'effectuant en utilisant des créneaux temporels d'une trame de multiplexage temporelle (R) et des premières et/ou secondes bandes de fréquences d'une plage de fréquences (JD-RCH) prédéfinie, les premières bandes de fréquences étant à bande étroite et les secondes bandes de fréquences à large bande, les bandes de fréquences à large bande utilisant pour la séparation d'abonné en supplément un procédé CDMA (Code Division Multiple Access), avec un émetteur et récepteur, qui supportent un mode GSM dans la bande de fréquences à bande étroite et un mode TDMA/CDMA dans la bande de fréquences à large bande, une transmission échelonnée progressivement pour des débits binaires étant rendue possible, **caractérisé en ce que** le récepteur contient plusieurs processeurs de canal de réception (79, 712) et l'émetteur plusieurs processeurs de canal d'émission (92), qui prévoient un traitement parallèle pour plusieurs canaux à l'intérieur des premières et/ou des secondes bandes de fréquences.

2. Agencement selon la revendication 1, sur lequel les premières bandes de fréquences forment un sous-ensemble des secondes bandes de fréquences.

3. Agencement selon l'une quelconque des revendications précédentes, dont l'émetteur contient un processeur de données d'émission, qui traite aussi bien les données transmises dans le mode GSM que les données transmises dans le mode TDMA/CDMA.

4. Agencement selon l'une quelconque des revendications précédentes, dont le récepteur contient un processeur de données de réception, qui traite aussi bien les données transmises dans le mode GSM que les données transmises dans le mode TDMA/CDMA.

5. Agencement selon l'une quelconque des revendications précédentes, avec une antenne commune pour les signaux de réception d'émission des premières et secondes bandes de fréquences.

6. Agencement selon la revendication 5, avec un niveau amplificateur commun pour les signaux de réception des premières et des secondes bandes de fréquences.

7. Agencement selon l'une quelconque des revendications 1 à 4, avec des antennes séparées pour les signaux d'émission et de réception des premières et des secondes bandes de fréquences.

8. Agencement selon l'une quelconque des revendications précédentes, sur lequel le récepteur contient des modules communs (62 à 66) aussi bien pour le mode GSM que pour le mode TDMA/CDMA, qui peuvent être réglés sur différentes fréquences porteuses, et contient des modules séparés (67 à 69 et 610 à 612), qui peuvent être réglés sur l'un des deux modes (GSM, TDMA/CDMA).

9. Agencement selon l'une quelconque des revendications précédentes, l'émetteur contenant des modules (86) communs aussi bien pour le mode GSM que pour le mode TDMA/CDMA, qui peuvent être réglés sur différentes fréquences porteuses, et contient des modules séparés (83 et 84, 85) qui peuvent être réglés sur l'un des deux modes (GSM, TDMA/CDMA).

10. Agencement selon l'une quelconque des revendications précédentes, qui est conçu comme une station de base (BS).

11. Agencement selon l'une quelconque des revendications 1 à 9, qui est conçu comme une station d'abonnés (MS).

12. Agencement selon la revendication 11, la station d'abonnés étant conçue comme une station d'abonnés fixe, qui est raccordée au réseau radio à la façon d'une Wireless Local Loop (WLL).

13. Agencement selon l'une quelconque des revendications précédentes, dans lequel des données utiles à large bande sont décomposées dans l'émetteur en flux partiels de données, codées en redondance, amenées dans une forme de bloc, étalées ensuite, insérées dans les créneaux temporels attribués et sont modulées dans une position de fréquence de bande de base sur au moins une sous-porteuse JD, et les signaux cumulés de la bande de base à large bande sont amenés dans la position de radiofréquence souhaitée, et sont envoyés dans le créneau temporel prévu sur une large bande au moyen d'un amplificateur de puissance RF unique.

14. Agencement selon l'une quelconque des revendications précédentes, sur lequel, dans le récepteur, un signal à bande large est amené dans la position de fréquence de la fréquence intermédiaire et l'amplificateur à fréquence intermédiaire est réglé sur la largeur de bande nécessaire pour la transmission à bande large, et une unité de détection JD modulaire détecte les signaux de sous-porteuse JD à la sortie de la partie de fréquence intermédiaire et les reconvertit au moyen d'un agencement de processeur de données à nouveau dans le flux de données initial à débit binaire élevé.

15. Agencement selon l'une quelconque des revendications précédentes, dans lequel, dans l'émetteur, une pluralité de sources de signaux est regroupée dans le niveau de faible puissance et est guidée au moyen d'un seul amplificateur d'émission linéaire sans coupleur d'antenne sur une seule antenne.

16. Agencement selon l'une quelconque des revendications précédentes, dans lequel des formats de bloc transmis dans les créneaux temporels sont conçus en ce qui concerne la trame de temps, le débit binaire et la séquence d'entraînement de telle sorte que les distorsions d'écho, se formant du fait de la propagation par plusieurs chemins, des signaux radio sont prises en compte également dans le cas de détours relativement long.

17. Agencement selon l'une quelconque des revendications précédentes, dans lequel, en cas de retards de signal relativement faibles, la longueur de créneau temporel et de trame de structures JD-CDMA est comprimée sur l'axe de temps d'un facteur défini en conservant complètement la structure de bloc connue par une élévation appropriée du débit binaire, des fréquences de rythme et de la largeur de bande du canal radio JD.
